# EUROPÄISCHE PATENTANMELDUNG

(11) **EP 0 886 080 A1**
(43) Veröffentlichungstag der Anmeldung: **23.12.1998**
(21) Anmeldenummer: 98102038.1
(22) Anmeldetag: 06.02.1998
(51) Int. Cl.: F16F 13/26, F16F 13/20

(54) **Schaltbares, hydraulisch dämpfendes Lager**

(30) Priorität: 18.06.1997 DE 19725771
(71) Anmelder: Firma Carl Freudenberg, 69469 Weinheim (DE)
(72) Erfinder: Schwerdt, Hans-Werner, 69514 Laudenbach (DE)

(57) **Zusammenfassung**

Schaltbares, hydraulisch dämpfendes Lager (1), umfassend einen Arbeits- (2) und einen Ausgleichsraum (3), die mit Dämpfungsflüssigkeit (4) gefüllt und durch zumindest eine Durchbrechung (5) in einer Trennwand (6) flüssigkeitsleitend verbunden sind, wobei die Durchbrechung (5) durch ein Stellglied (7) einer Stellvorrichtung (8) verschließbar ist. Das Stellglied (7) weist auf der dem Arbeitsraum (2) zugewandten Seite eine mit einem gasförmigen Medium gefüllte, volumenveränderliche Kammer (9) auf.

## Beschreibung

### Technisches Gebiet

Die Erfindung betrifft ein schaltbares, hydraulisch dämpfendes Lager mit den Merkmalen des Oberbegriffs von Anspruch 1.

### Stand der Technik

Ein solches Lager ist aus der DE 41 41 332 A1 bekannt. Das vorbekannte Lager ist als Hydrolager ausgebildet, wobei das Stellglied durch ein Druckmittel betätigbar ist. Das Stellglied ist durch einen Kolben gebildet, der einer ortsfest im Gehäuse angeordneten, druckmittelbeaufschlagbaren Steuerdruckdose gasdicht und relativ beweglich zugeordnet ist, wobei die Steuerdruckdose durch eine zumindest teilweise elastisch nachgiebige erste Ringmembran begrenzt ist, die den Kolben und die Steuerdruckdose gegenüber dem Gehäuse abdichtet.

### Darstellung der Erfindung

Der Erfindung liegt die Aufgabe zugrunde, ein Lager der vorbekannten Art derart weiterzuentwickeln, daß eine Schwingungsanregung des Stellglieds durch Druckerhöhungen im Arbeitsraum vermieden wird.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, daß das Stellglied auf der dem Arbeitsraum zugewandten Seite eine mit einem gasförmigen Medium gefüllte volumenveränderliche Kammer aufweist. Hierbei ist von Vorteil, daß einerseits hochfrequente Schwingungen wirksam isoliert werden und andererseits eine Schwingungsanregung des Stellglieds durch Druckerhöhungen im Arbeitsraum vermieden wird. Außerdem wird durch die mit einem gasförmigen Medium gefüllte Kammer ein Anstieg der dynamischen Federsteifigkeit vermieden, der eine Geräuschisolierung mindern würde.

Die Kammer ist durch zumindest eine elastisch nachgiebige, membranartig ausgebildete Kammerwand begrenzt. In das Lager eingeleitete, hochfrequente Schwingungen sowie daraus resultierende Druckschwankungen im Arbeitsraum werden durch die volumenveränderliche Kammer in ausgezeichneter Weise eliminiert, ohne daß die eingeleiteten Schwingungen auf das Stellglied bzw. das Gehäuse des Lagers übertragen werden, so daß das Stellglied nicht in Resonanz geraten kann

Die Kammerwand ist bevorzugt auf der dem Arbeitsraum zugewandten Seite angeordnet und weist die Form eines Rollbalgs auf. Die Isolierung höher frequenter Schwingungen wird durch die mit dem gasförmigen Medium gefüllte Kammer bewirkt. Sekundäre Hilfsmittel, beispieldsweise eine Ringmembran, die innerhalb der Trennwand angeordnet ist, sind zur Schwingungsisolierung daher entbehrlich, wodurch das Lager besonders preisgünstig herstellbar ist, da zur Bildung der gasgefüllten Kammer keine zusätzlichen Bauteile erforderlich sind.

Der Rollbalg ist bevorzugt umfangsseitig durch ein kreisringförmiges Filmscharnier begrenzt, das mit einer in Richtung des Arbeitsraums kuppelförmig ausgebildeten Aufwölbung verbunden ist. Der Rollbalg ist als Knickfeder gestaltet, wobei das Filmscharnier die Funktion eines Gelenks hat. Dadurch ist eine ausgezeichnete Hin- und Herbeweglichkeit in Richtung der eingeleiteten Schwingungen gewährleistet.

Die Kammer kann zumindest teilweise axial innerhalb der Durchbrechung angeordnet sein. Hierbei ist von Vorteil, daß die aus den eingeleiteten Schwingungen resultierenden Druckschwankungen innerhalb des Arbeitsraums direkt auf die elastisch nachgiebige, membranartig ausgebildete Kammerwand wirken und von dieser isoliert werden. Eine Schwingungsübertragung auf den Stellkolben, der ebenfalls, wie die Kammer, einen Bestandteil der Stellvorrichtung bildet, welche eine Feder-Masse-System, d.h. eine Elastizität darstellt, wird durch eine derartige Ausgestaltung sicher vermieden.

Das Stellglied umfaßt einen Verschlußstopfen aus elastomerem Werkstoff und einen Stellkolben, wobei die Kammer vom Verschlußstopfen und dem Stellkolben umschlossen und begrenzt ist. Eine Übertragung hochfrequenter Schwingungen vom Arbeitsraum auf den Stellkolben wir dadurch vermieden, daß zwischen dem Stellkolben und dem Arbeitsraum die mit einem gasförmigen Medium gefüllte Kammer angeordnet ist. Eine präzise Schaltbarkeit des Lagers ist dadurch sichergestellt, und es können keine Resonanzen in der Stellvorrichtung auftreten, die eventuell zu einem teilweise Öffnen der Durchbrechung führen könnten und damit das Dämpfungssystem negativ beeinflussen würden.

Der Verschlußstopfen kann auf der dem Arbeitsraum zugewandten Seite eine topfförmige Ausnehmung aufweisen, deren bodenseitige Begrenzung durch die Kammerwand gebildet ist. Die umfangsseitige Begrenzung der in Richtung des Arbeitsraums offenen Stirnseite des Verschlußstopfens berührt die Trennwand bei geschlossener Durchbrechung unter elastischer Vorspannung dichtend. Ein weiterer Vorteil dieser Ausführung ist darin zu sehen, daß die Axialbewegung des Stellkolbens in Richtung des Arbeitsraums durch den vergleichsweise hohen Strömungswiderstand der Ausnehmung gedämpft wird. Bei geöffneter Durchbrechung, beispielsweise im Leerlauf der durch das Lager abgestützen Verbrennungskraftmaschine, weist das Lager durch die topfförmige Ausnehmung eine ausgezeichnete Tilgerwirkung auf.

Um eine weitere Verbesserung der Isolierung höher frequenter Schwingungen zu erzielen, kann die Trennwand eine in Richtung der eingeleiteten Schwingungen verschiebbare oder eingespannte aber auslenkbare, mit Dämpfungsflüssigkeit aus Arbeits- und Ausgleichsraum beaufschlagbare Ringmembran umfassen, wobei die Kammerwand und die Ringmembran in einer funktionstechnischen Parallelschaltung angeordnet sind. Die Trennwand ist dabei bevorzugt durch zwei Kreisringe gebildet, die einander axial benachbart zugeordnet sind, wobei zwischen den Kreisringen die Ringmembran angeordnet ist. Im Bereich der radialen Überdeckung der Kreisringe und der Ringmembran weisen die Kreisringe zur Beaufschlagung der Ringmembran mit den höherfrequenten Schwingungen gitterartige Durchbrechungen auf. Die hydraulisch wirksame Fläche zur Isolierung der höherfrequenten Schwingungen ist durch die Parallelschaltung der Ringmembran und der Kammerwand deutlich vergrößert.

Der Verschlußstopfen und der Stellkolben sind kraft- und/oder formschlüssig verbunden. Der Stellkolben kann einen sich in radialer Richtung erstreckenden Ringvorsprung aufweisen, der in einer entsprechenden ringförmigen Ausnehmung des Verschlußstopfens angeordnet ist. Der Ringvorsprung kann beispielsweise in die ringförmige Ausnehmung eingeklebt sein.

Bevorzug sind der Verschlußstopfen und der Stellkolben haftend durch Verklebung miteinander verbunden. Hierbei ist von Vorteil, daß die Verbindung absolut dicht ist.

Bevorzugt besteht der Stellkolben aus einem polymeren Werkstoff. Hierbei ist von Vorteil, daß der Stellkolben durch diesen Werkstoff einfach herstellbar ist und nur eine geringe Masse aufweist. Die Massenträgheit bei Betätigung des Stellkolbens ist daher gering, so daß sich eine exakte Schaltbarkeit des Lagers ergibt.

Gemäß einer vorteilhaften Ausgestaltung ist die Durchbrechung im Zentrum der Trennwand angeordnet, wobei die Durchbrechung im Querschnitt betrachtet axial in Richtung des Ausgleichsraums kegelförmig erweitert ist. Der Vorteil der zentral angeordneten Kammer ist darin zu sehen, daß die Schwingungen bei Eintritt in die Arbeitskammer auf kürzestem Weg eliminiert werden. Das trifft besonders dann zu, wenn nach einer besonderen Ausführung die Membran der Kammerwand sich durch die Trennwand bis in den Arbeitsraum erstreckt. Durch die kegelförmige Erweiterung wird im Betätigungsfall der Stellvorrichtung ein konisch verlaufender Spalt gebildet, dessen Querschnitt sich fortlaufend vergrößert, bis er größer ist als die Durchbrechung innerhalb der Trennwand. Das Querschnitts-Längenverhältnis ändert sich bei Öffnung des Stellglieds kontinuierlich, bis die Oberkante des Verschlußstopfens die Unterkante der Trennwand erreicht. Durch diese kontinuierliche Kanalveränderung wird ein sanfter aber schneller und wirksamer Schaltvorgang erreicht, ohne daß es zu einem störendem Druckabfall kommt bzw. ohne daß ein übermäßiger Druckanstieg erfolgt, weil der Schaltvorgang zu langsam abläuft.

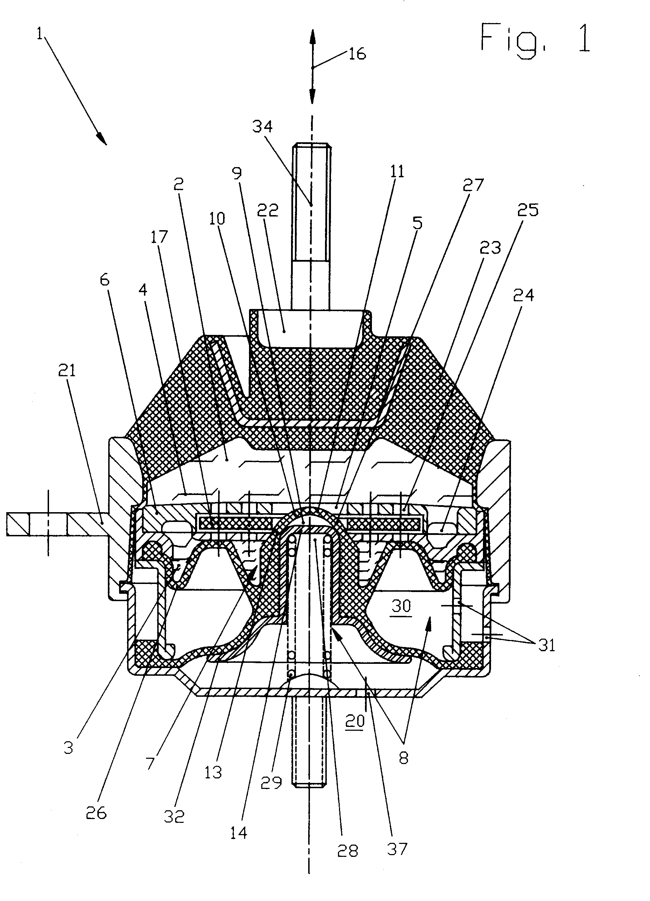

Drei Ausführungsbeispiele des erfindungsgemäßen Lagers werden nachfolgend anhand der Fig. 1 bis 3 näher erläutert.

### Kurzbeschreibung der Zeichnung

Diese zeigen:
In den Fig. 1 bis 3 drei Ausführungsbeispiele des erfindungsgemäßen Lagers.

### Ausführung der Erfindung

In den Fig. 1 bis 3 ist jeweils ein Ausführungsbeispiel eines schaltbaren, hydraulisch dämpfenden Lagers gezeigt, das ein Auflager 21 und ein Traglager 22 umfaßt, die durch einen hohlkegelförmigen Federkörper 23 aus elastomerem Werkstoff aufeinander abgestützt sind. Der Arbeitsraum 2 und der Ausgleichsraum 3 sind innerhalb des Lagers angeordnet und jeweils mit Dämpfungsflüssigkeit 4 gefüllt, wobei der Arbeits- 2 und der Ausgleichsraum 3 durch die Trennwand 6 voneinander getrennt sind. Die Trennwand 6 ist in jedem der Ausführungsbeispiele zweiteilig ausgebildet, wobei außenumfangsseitig ein ringförmiger Dämpfungskanal 24 vorgesehen ist, der einerseits in den Arbeitsraum 2 und andererseits in den Ausgleichsraum 3 mündet. Außerdem weist die Trennwand 6 radial innerhalb des Dämpfungskanals 24 gitterförmig angeordnete Bohrungen 25 auf, durch die die Ringmembran 17, die innerhalb der Trennwand 6 angeordnet ist, durckbeaufschlagbar ist. Der Ausgleichsraum 3 ist auf der der Trennwand 6 abgewandten Seite mit einer im wesentlichen durcklos volumenaufnehmenden, membranartig ausgebildeten Abschlußwand 26 aus elastomerem Werkstoff versehen.

Die Durchbrechung 5 ist im Zentrum der Trennwand 6 angeordnet und durch das Stellglied 7 der Verstellvorrichtung 8 verschließbar. Das Stellglied 7 weist auf der dem Arbeitsraum 2 zugewandten Seite eine mit einem gasförmigen Medium gefüllte, volumenveränderliche Kammer 9 auf, die in den hier gezeigten Ausführungsbeispielen mit Luft gefüllt ist.

Auf der dem Arbeitsraum 2 zugewandten Seite ist die Kammer 9 in jedem der Ausführungsbeispiele durch eine elastisch nachgiebige, membranartig ausgebildete Kammerwand 10 begrenzt, die zumindest teilweise axial innerhalb der Durchbrechung 5 angeordnet ist.

Die Stellvorrichtung 8 umfaßt ein als Verschlußstopfen 13 ausgebildetes Stellglied 7 aus elastomerem Werkstoff und einen Stellkolben 14, der aus polymerem Werkstoff besteht. Die Kammer 9 ist vom Verschlußstopfen 13 und dem Stellkolben 14 begrenzt.

In jedem der hier gezeigten Ausführungsbeispiele sind die Kammerwand 10 und die Ringmembran 17 zur Isolierung höher frequenter, akustisch störender Schwingungen in einer funktionstechnischen Parallelschaltung angeordnet.

Zur Funktion der Lager wird folgendes ausgeführt:

Zur Dämpfung tieffrequenter, großamplitudiger Schwingungen werden Flüssigkeitsbestandteile der Dämpfungsflüssigkeit vom Arbeitsraum 2 durch den Dämpfungskanal 24 in den Ausgleichsraum 3 verlagert und wieder zurück, wobei der Grad der Dämpfung von der Masse der im Dämpfungskanal 24 hin- und herschwingenden Flüssigkeit abhängt, d.h. von der Länge des Dämpfungskanals 24 und dessen Querschnitt.

Werden demgegenüber höherfrequente, kleinamplitudige Schwingungen in das Lager eingeleitet, erfolgt keine Flüssigkeitsverlagerung vom Arbeits- 2 in den Ausgleichsraum 3 durch den Dämpfungskanal 24. In diesem Betriebszustand ist der Dämpfungskanal 24 durch die Massenträgheit der innerhalb des Kanals befindlichen Flüssigkeitsbestandteile gesperrt.

Die Isolierung der höherfrequenten Schwingungen erfolgt durch die in Richtung der eingeleiteten Schwingungen Hin- und Herbeweglichkeit der Kammerwand 10 sowie der dazu parallel geschalteten Ringmembran 17. Ist die zentrale Durchbrechung 5 durch den Verschlußstopfen 13 verschlossen, weist das erfindungsgemäße Lager die gleichen vorteilhaften Gebrauchseigenschaften auf, wie nicht-schaltbare Hydrolager.

Bei niedrigen Motordrehzahlen, z.B. im Leerlauf wird,duch Betätigung der Stellvorrichtung wird der Verschlußstopfen 13 zumindest teilweise aus der Durchbrechung 5 entfernt, wodurch die Durchbrechung 5 innerhalb der Trennwand 6 freigegeben wird. Dadurch wird die steifigkeitserhöhende Dämpfung großamplitudiger, niederfrequenter Schwingungen ausgeschaltet, so daß nur die Federung des Federkörpers wirksam ist..

In Fig. 1 ist ein erstes Ausführungsbeispiel des erfindungsgemäßen Lagers gezeigt. Das Stellglied 7 der Stellvorrichtung 8 besteht aus einem Verschlußstopfen 13 aus elastomerem Werkstoff und ist einstückig ineinanderübergehend und materialeinheitlich mit der Abschlußwand 26 des Ausgleichsraums 3 ausgebildet. Außerdem umfaßt das Stellglied 7 einen Steuerkolben 14, der aus polymerem Werkstoff besteht, wobei die Kammern 9 vom Verschlußstopfen 13 und dem Stellkolben 14 umschlossen und begrenzt ist. Die Kammerwand 10 ist durch eine Aufwölbung 27 gebildet, die kuppelförmig in Richtung des Arbeitsraums 2 gewölbt ist. Die Kammerwamd 10 ist im wesentlichen mediumsdicht und kraftschlüssig mit dem Stellkolben 14 verbunden. Der Stellkolben 14 ist mit einer stirnseitigen Ausnehmung 28 versehen, zur Aufnahme einer Druckfeder 29, die die Durchbrechung 5 im Normalzustand, beispielsweise bei Drehzahlen einer abgestützten Verbrennungskraftmaschine oberhalb der Lerrlaufdrehzahl, verschließt. Die Druckfeder 29 wirkt gegen einen Unterdruck, der durch den Anschluß 37 an die Stellvorrichtung 8 anlegbar ist.

Der Hohlraum 30 ist durch Öffnungen 31 mit der Atmosphäre 20 verbunden.

Bei Leerlaufdrehzahlen wird die Stellvorrichtung durch Unterdruck betätigt.

Der Stellkolben 14 ist auf der dem Arbeitsraum abgewandten Seite mit einem im wesentlichen trichterförmig ausgebildeten Anschlag 32 versehen, um eine Überdehnung beispielsweise der Abschlußwand 26 bei Betätigung der Stellvorrichtung 8 zu vermeiden. Der Anschlag dient gleichzeitig der Versteifung der anliegenden Stellmembran.

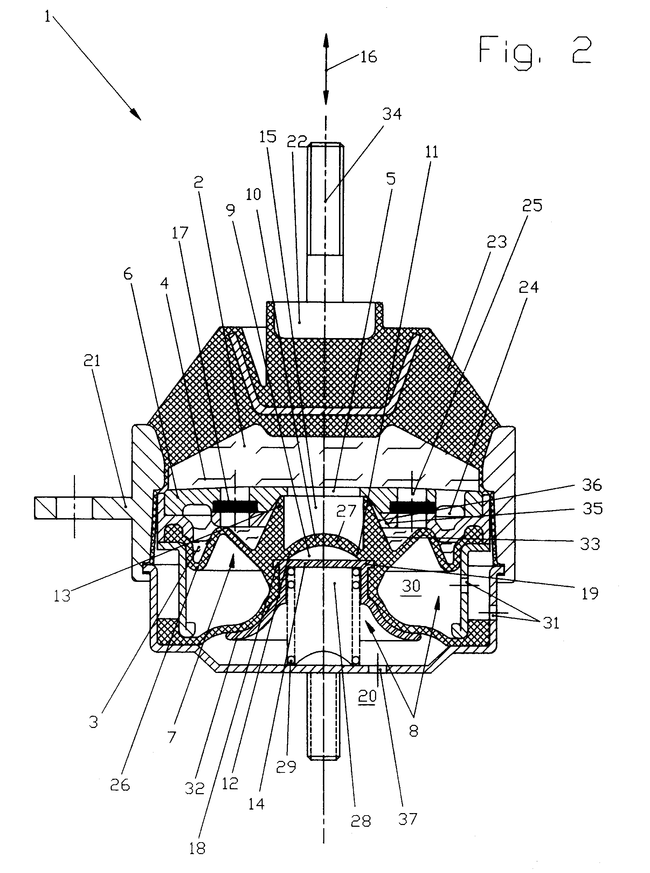

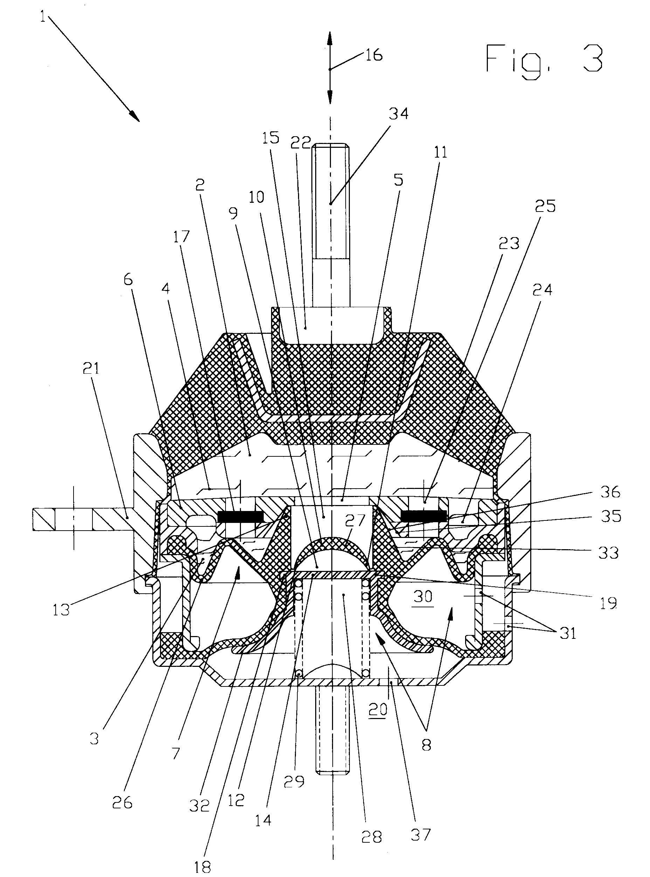

Die Ausführungsbeispiele aus den Fig. 2 und 3 unterscheiden sich von dem Ausführungsbeispiel Fig. 1 im wesentlichen dadurch, daß der Verschlußstopfen 13 auf der dem Arbeitsraum 2 zugewandten Seite eine topfförmige Ausnehmung 15 aufweist, deren bodenseitige Begrenzung durch die Kammerwand 10 gebildet ist. Außerdem ist die Durchbrechung 5 im Querschnitt betrachtet axial in Richtung des Ausgleichsraums 3 kegelförmig erweitert.

Ferner sind die Stellkolben 14 aus den Ausführungsbeispielen Fig. 2 und 3 mit einem sich in radialer Richtung erstreckenden Ringvorsprung 18 versehen, der in einer entsprechenden ringförmigen Ausnehmung 19 des Verschlußstopfens 13 angeordnet und in diesen Ausführungsbeispielen verklebt ist.

Die topfförmige Ausnehmung 15 innerhalb des Verschlußstopfens 13 ist durch eine kegelförmige Außenumfangswand 33 begrenzt, die mit der Längsachse 34 des Lagers einen kleineren Winkel einschließt, als die Begrenzungsfläche 35 der Durchbrechung 5. Im Betätigungsfall der Stellvorrichtung 8 entsteht ein konisch verlaufender Spalt 36, dessen Querschnitt sich während der Öffnung der Durchbrechung 5 fortlaufend vergrößert.

Durch das Austreten des Verschlußstopfens 13 auf der Trennwand 6 nach unten verkürzt sich gleichzeitig mit der Vergrößerung des kreisringförmigen Öffnungsquerschnitts durch die kegelförmige Erweiterung in Richtung des Ausgleichsraum 3 die Länge des Kanals axial in Richtung der eingeleiteten Schwingungen. Das Querschnitts- Längenverhältnis ändert sich dabei kontinuirlich, bis die Oberkante des Verschlußstopfens 13 die Unterkante der Trennwand 6 erreicht hat. Durch diese kontinuierliche Veränderung des Querschnitts- Längenverhältnisses wird gegenüber den vorbekannten Lagern ein sanfter, schneller und wirksamer Schaltvorgang erreicht, ohne daß es zu störendem Druckabfall kommt bzw. ohne daß ein übermäßiger Druckanstieg erfolgt. Der Tilgereffekt im Verlauf der dynamischen Steifigkeit ist ebenfalls noch wirksam, weil der Kanal noch ein hierfür ausreichende Länge aufweist.

Die Ausführungsbeispiele aus den Fig. 2 und 3 unterscheiden sich durch die Ausgestaltung der Kammerwand 10.

In Fig. 2 weist die Kammerwand 10 eine im wesentlichen gleichbleibende Materialstärke auf, auch im Bereich des Übergangs zur Außenumfangswand 33. Durch die Ausführung der Kammerwanddicke kann deren Steifigkeit bestimmt werden.

Demgegenüber ist die Kammerwand 10 in Fig. 3 in Richtung der eingeleiteten Schwingungen besonders nachgiebig ausgebildet. Die besonders weiche Kammerwand wird in diesem Ausführungsbeispiel durch ein umlaufendes Filmscharnier 12 erreicht, das sich kreisringförmig im Bereich des Übergangs zur Außenumfangswand 33 erstreckt, wobei die Materialstärke des Filmscharniers 12 in Richtung der kuppelförmig ausgebildeten Aufwölbung 27 kontinuierlich zunimmt. Eine derartige Ausgestaltung ist insbesondere zur Isolierung sehr hoch frequenter, sehr kleinamplitudiger Schwingungen vorgesehen. Die Ausgestaltung der Kammerwand 10 hängt von den jeweiligen Gegebenheiten des Anwendungsfalls ab.

## Patentansprüche

1. Schaltbares, hydraulisch dämpfendes Lager, umfassend einen Arbeits- und einen Ausgleichsraum, die mit Dämpfungsflüssigkeit gefüllt und durch zumindest eine Durchbrechung in einer Trennwand flüssigkeitsleitend verbunden sind, wobei die Durchbrechung durch ein Stellglied einer Stellvorrichtung verschließbar ist, **dadurch** **gekennzeichnet**, daß das Stellglied (7) auf der dem Arbeitsraum (2) zugewandten Seite eine mit einem gasförmigen Medium gefüllte, volumenveränderliche Kammer (9) aufweist.

2. Lager nach Anspruch 1, dadurch gekennzeichnet, daß die Kammer (9) durch zumindest eine elastisch nachgiebige, membranartig ausgebildete Kammerwand (10) begrenzt ist.

3. Lager nach Anspruch 2, dadurch gekennzeichnet, daß die Kammerwand (10) auf der dem Arbeitsraum (2) zugewandten Seite angeordnet ist und die Form eines Rollbalgs (11) aufweist.

4. Lager nach Anspruch 3, dadurch gekennzeichnet, daß der Rollbalg (11) umfangsseitig durch ein kreisringförmiges Filmscharnier (12) begrenzt ist, das mit einer in Richtung des Arbeitsraums (2) kuppelförmig ausgebildeten Aufwölbung (27) verbunden ist.

5. Lager nach einem der Ansprüche 1 bis 4, dadurch gekennzeichnet, daß die Kammer (9) zumindest teilweise axial innerhalb der Durchbrechung (5) angeordnet ist.

6. Lager nach einem der Ansprüche 1 bis 5, dadurch gekennzeichnet, daß das Stellglied (7) einen Verschlußstopfen (13) aus elastomerem Werkstoff und einen Stellkolben (14) umfaßt und daß die Kammer (9) vom Verschlußstopfen (13) und dem Stellkolben (14) umschlossen und begrenzt ist.

7. Lager nach Anspruch 6, dadurch gekennzeichnet, daß der Verschlußstopfen (13) zumindest teilweise axial innerhalb der Durchbrechung (5) angeordnet ist.

8. Lager nach einem der Ansprüche 6 bis 7, dadurch gekennzeichnet, daß der Verschlußstopfen (13) auf der dem Arbeitsraum (2) zugewandten Seite eine topfförmige Ausnehmung (15) aufweist, deren bodenseitige Begrenzung durch die Kammerwand (10) gebildet ist.

9. Lager nach einem der Ansprüche 1 bis 8, dadurch gekennzeichnet, daß die Trennwand (6) eine in Richtung (16) der eingeleiteten Schwingungen verschiebbare oder eingespannte, aber auslenkbare, mit Dämpfungsflüssigkeit (4) aus Arbeits- (2) und Ausgleichsraum (3) beaufschlagbare Ringmembran (17) umfaßt und daß die Kammerwand (10) und die Ringmembran (17) in einer funktionstechnischen Parallelschaltung angeordnet sind.

10. Lager nach einem der Ansprüche 1 bis 9, dadurch gekennzeichnet, daß der Verschlußstopfen (13) und der Stellkolben (14) kraft- und/oder formschlüssig verbunden sind.

11. Lager nach Anspruch 10, dadurch gekennzeichnet, daß der Verschlußstopfen (13) und der Stellkolben (14) haftend durch Verklebung verbunden sind.

12. Lager nach einem der Ansprüche 10 bis 11, dadurch gekennzeichnet, daß der Stellkolben (14) einen sich in radialer Richtung erstreckenden Ringvorsprung (18) aufweist, der in einer entsprechenden ringförmigen Ausnehmung (19) des Verschlußstopfens (13) angeordnet ist.

13. Lager nach einem der Ansprüche 6 bis 12, dadurch gekennzeichnet, daß der Stellkolben (14) aus einem polymeren Werkstoff besteht.

14. Lager nach einem der Ansprüche 1 bis 13, dadurch gekennzeichnet, daß die Durchbrechung (5) im Zentrum der Trennwand (6) angeordnet ist.

15. Lager nach einem der Ansprüche 1 bis 14, dadurch gekennzeichnet, daß die Durchbrechung (5) im Querschnitt betrachtet axial in Richtung des Ausgleichsraums (3) kegelförmig erweitert ist.
